(19) Europäisches Patentamt
European Patent Office
Office européen des brevets

(11) **EP 2 965 013 B1**

(12) **EUROPÄISCHE PATENTSCHRIFT**

(45) Veröffentlichungstag und Bekanntmachung des Hinweises auf die Patenterteilung:
**27.03.2019   Patentblatt 2019/13**

(21) Anmeldenummer: **14719221.5**

(22) Anmeldetag: **07.03.2014**

(51) Int Cl.:
**F24D 17/00** (2006.01)   **F25B 30/06** (2006.01)
**F24D 17/02** (2006.01)

(86) Internationale Anmeldenummer:
**PCT/DE2014/000100**

(87) Internationale Veröffentlichungsnummer:
**WO 2014/135147 (12.09.2014 Gazette 2014/37)**

(54) **VERFAHREN UND VORRICHTUNG ZUR RÜCKGEWINNUNG VON ENERGIE VON EINEM ZU KÜHLENDEN WÄRMEENERGIETRÄGER**

METHOD AND DEVICE FOR RECOVERING ENERGY FROM A HEAT ENERGY CARRIER

PROCÉDÉ ET DISPOSITIF DE RÉCUPÉRATION D'ÉNERGIE À PARTIR D'UN FLUIDE CALOPORTEUR À REFROIDIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2013   DE 102013003919**

(43) Veröffentlichungstag der Anmeldung:
**13.01.2016   Patentblatt 2016/02**

(73) Patentinhaber:
• **Jaske, Wolfgang**
**49811 Lingen (DE)**
• **Wolf, Peter**
**26209 Hatten (DE)**

(72) Erfinder:
• **Jaske, Wolfgang**
**49811 Lingen (DE)**
• **Wolf, Peter**
**26209 Hatten (DE)**

(74) Vertreter: **Siekmann, Gunnar et al**
**Jabbusch Siekmann & Wasiljeff**
**Patentanwälte**
**Hauptstrasse 85**
**26131 Oldenburg (DE)**

(56) Entgegenhaltungen:
**EP-A2- 2 525 157        WO-A2-2011/023352**
**WO-A2-2011/045767        DE-A1- 2 757 721**
**DE-A1- 3 406 518        US-A- 4 265 094**
**US-A1- 2010 326 638**

**Beschreibung**

Die Erfindung betrifft ein Verfahren zur Rückgewinnung von Energie von einem flüssigen Wärmeenergieträger auf ein wärmeenergieübernehmendes Medium, insbesondere eine Flüssigkeit, insbesondere Wasser mit den Merkmalen des Oberbegriffs des Patentanspruchs 1. Weiterhin betrifft die Erfindung eine Vorrichtung zur Rückgewinnung von Energie von einem zu kühlenden, flüssigen Wärmeenergieträger auf ein wärmeenergieübernehmendes Medium, insbesondere Frischwasser, mit einem Wärmeüberträger mit den Merkmalen des Oberbegriffs des Patentanspruchs 7.

Ein gattungsgemäßes Verfahren und eine gattungsgemäße Vorrichtung sind aus der US 2010/0326638 A1 bekannt. Dort ist ein Recyclingsystem für Abwärme beschrieben. Mit dem System wird Frischwasser von einer Ausgangstemperatur von 20° C auf eine gebrauchsfähige Temperatur von 45° C erwärmt. In einem ersten Schritt wird das Wasser in einen Wärmetauscher abgekühlt und dann durch eine Wanne mit einem Wärmeträger geführt, um dort von 10° C auf 30° C erwärmt zu werden. Danach durchläuft das Wasser erneut einen Wärmetauscher, in dem das Wasser weiter erwärmt wird. Dieser zweite Wärmetauscher wird in einem Wärmepumpenkreislauf betrieben, der seine Energie aus dem ersten Wärmetauscher bezieht, in dem das Frischwasser abgekühlt worden ist.

Verschiedene Wärmetauscher sind aus den Druckschriften WO 2011/023352 A2 und DE 27 57 721 A1 bekannt.

Die einfachste Form der Wärmeenergieenergierückgewinnung ist die Übertragung der Wärmeenergie mittels eines Wärmeenergieüberträgers von einem Wärmeenergielieferanten auf ein zu erwärmendes Medium. Die meisten Abwärmeenergiequellen sind Niedertemperatur-Abwärmeenergiequellen. Die reine Wärmeenergieübertragung mittels eines Wärmeenergieüberträgers z. B. auf zulaufendes Frischwasser ist mangels einer ausreichend großen Temperaturdifferenz der Eingangswerte zwischen den beiden Medien und einer technisch und wirtschaftlich einzuhaltenden Temperaturdifferenz der beiden Teilströme nach dem Wärmeenergietausch begrenzt.

Beispiel:

Als Wärmeenergiequelle stehen 5 m$^3$ h$^{-1}$ Wasser mit einer Temperatur von 22 °C zur Verfügung und als Wärmeenergiesenke Wasser mit einer Temperatur von 12 °C. Die maximale Temperaturdifferenz beträgt demnach 10 °C. Daraus folgt, dass beide Teilströme eine Energiedifferenz von 58 kWh haben. Geht man davon aus, dass die mittlere Temperaturdifferenz des Wärmeenergieenergieüberträgers bei identischen Massenströmen der Wärmeenergiequelle und der Wärmeenergiesenke bei gleicher Wärmekapazität 3 K beträgt, lässt sich nur die Wärmeenergie einer Temperaturdifferenz von 7 K dies entspricht 40,6 kWh übertragen. Eine Verdoppelung der Übertragungsfläche halbiert die mittlere Temperaturdifferenz auf 1,5 K erhöht die Übertragungsleistung bei sonst identischen Bedingungen aber nur auf 49,3 kWh m$^{-3}$ und führt somit nur zu einer Verbesserung der Wärmeenergierückgewinnungsrate um 15 % auf 85 %. Wobei immer noch 15 % der vorhandenen Energie dieses Temperaturfensters ungenutzt bleiben.

Eine weitere Möglichkeit der Nutzung niedrig temperierter Wärmeenergieenergie ist durch den Einsatz eines Zwischensystems möglich, wie z.B. eine Wärmepumpe. In einer Wärmepumpe wird die zurück zu gewinnende Energie auf eine zu verdampfende Flüssigkeit in Form von Verdampfungsenthalpie in die Gasphase übertragen. Das Gas (Dampf der verdampften Flüssigkeit) wird durch Einsatz eines i. a. elektrisch betriebenen Kompressors komprimiert und erwärmt sich dabei. Die so auf ein höheres Temperaturniveau gebrachte Energie kann dann auf ein kälteres Medium z. B. zu erwärmendes Wasser übertragen werden. Unter dem erhöhten Druck, der höher ist als der Dampfdruck der Flüssigkeit kondensiert das Gas, so dass die Verdampfungsenthalpie d. h. die aus der Abwärmeenergiequelle entnommene Energie auf einem höheren Temperaturniveau zurück erhalten wird.

Für den geschilderten Prozess ist Energie aufzuwenden und er ist gewissen technischen und thermodynamischen Grenzen ausgesetzt. Thermodynamisch begrenzt wird der Prozess durch den Carnot - Wirkungsgrad

$$\eta_c = (T_{warm} - T_{kalt}) / T_{warm}$$

bzw. durch den Kehrwert dem COP (Coeffizient of performance).

$$COP_{max} = 1 / \eta_c = T_{warm} / (T_{warm} - T_{kalt})$$

Da in einer Maschine weitere Wirkungsgradverluste auftreten, wird der COP als Quotient der abgegebenen Wärmeenergie ($Q_c$) zur aufgewendeten elektrischen Energie (W) angegeben.

$$COP = Q_c / W$$

Daraus folgt, je höher die Temperaturdifferenz zwischen der Wärmeenergiequelle und dem Kondensator und damit aufzuwendende Arbeit W ist, desto schlechter wird der COP. Die Qualität der Wärmeenergieumwandlung in einer Wärmepumpe wird Gütegrad ($\eta_{WP}$) genannt und ergibt sich aus dem Quotienten des COP zum COP$_{max}$

$$\eta_{WP} = COP / COP_{max} < 1$$

und liegt im Bereich 0,45 bis 0,56.

Eine Kombination dieser beiden beschriebenen Möglichkeiten, nämlich die Verwendung eines Wärmeüberträgers, der auch als Wärmetauscher oder Wärmeaustauscher bezeichnet wird, mit einer Wärmepumpe ist beispielsweise in der DE 34 06 518 A1 beschrieben.

Von der wirtschaftlichen Seite aus gesehen, steigen die Investitionskosten mit der Menge der umzusetzenden Energie.

Der Erfindung liegt die Aufgabe zugrunde die zurückzugewinnende Wärmeenergiemenge einer Wärmeenergiequelle gegenüber den bekannten Verfahren erheblich zu erhöhen und gleichzeitig die Investitionskosten sowie auch die Betriebskosten einer Wärmeenergierückgewinnungsanlage in Bezug zur zurück gewonnenen Energiemenge erheblich zu reduzieren.

Die Lösung der Aufgabe erfolgt verfahrensmäßig mit den Merkmalen des Patentanspruchs 1. Vorrichtungsmäßig wird die Aufgabe mit den Merkmalen des Patenanspruchs 7 gelöst. Vorteilhafte Ausgestaltungen der Erfindung sind in den Unteransprüchen angegeben.

Bei einem Verfahren zur Rückgewinnung von Energie von einem flüssigen Wärmeenergieträger, typischerweise Brauchwasser oder Abwasser, auf ein wärmeenergieübernehmendes Medium, typischerweise Frischwasser, ist erfindungswesentlich vorgesehen, dass das wärmeenergieübernehmende Medium in einer Wärmepumpe abgekühlt wird, indem die Wärmeenergie durch Verdampfen eines Kältemittels in der Wärmepumpe übertragen wird und das wärmeenergieübernehmende Medium dann in einem Wärmeüberträger, insbesondere einen Wärmetauscher, durch den abzukühlenden Wärmeenergieträger aufgewärmt wird.

Der Kern der Erfindung liegt also darin, dass das wärmeenergieübernehmende Medium zunächst abgekühlt wird. Dadurch wird die Leistung des Wärmeüberträgers, insbesondere eines Wärmetauschers, erhöht. Die Temperaturdifferenz zwischen den beiden Medien wird dadurch erhöht und die Effektivität des Wärmeüberträgers deutlich verbessert.

I Erfindungsgemäß wird nur ein Teilstrom des wärmeenergieübernehmenden Mediums, nachdem es im Wärmeüberträger erwärmt wurde, einem Kondensator der Wärmepumpe zugeführt, der die im Dampf des Kältemittels der Wärmepumpe enthaltene Wärmeenergie übernimmt, so dass sich das wärmeenergieübernehmende Medium erwärmt. Auf diese Weise wird die Effektivität des Verfahrens weiter erhöht bzw. die Temperatur des wärmeenergieübernehmenden Mediums noch weiter erhöht. Wärmepumpe und Wärmeüberträger arbeiten also nicht linear nacheinander, sondern sind in der Prozessführung ineinander verwoben.

In einer Ausführungsform beträgt der Teilstrom zwischen 40% und 60%, insbesondere zwischen 45% und 55%, so dass also eine vergleichsweise gleichmäßige Aufteilung der beiden Teilströme erfolgt. Wenn nur für einen Teil des wärmeenergieübernehmenden Mediums eine besonders hohe Temperatur erreicht werden soll, so wird bevorzugt ein Teilstrom von weniger als 40%, insbesondere weniger als 30% und besonders bevorzugt von weniger als 20% durch den Kondensator der Wärmepumpe geführt und nimmt die dort enthaltene Energie auf, so dass eine besonders hohe Temperatur erreicht werden kann.

In einer besonders bevorzugten Ausgestaltung der Erfindung wird der abzukühlende Wärmeenergieträger in einem nächsten Verfahrensschritt einem zweiten Verdampfer einer zweiten Wärmepumpe zugeführt, die Wärmeenergie des abzukühlenden Wärmeenergieträgers durch Verdampfen eines zweiten Kühlmittels in einem zweiten Verdampfer übertragen und durch Kompression des Kühlmitteldampfs auf ein höheres Temperaturniveau gebracht und dann in einem zweiten Kondensator der zweiten Wärmepumpe auf das wärmeenergieübernehmende Medium übertragen. Durch einen solchen nachgeordneten Prozess mit einer zusätzlichen Wärmepumpe kann die Temperatur des wärmeenergieübernehmenden Mediums, insbesondere des Frischwassers, weiter erhöht werden.

Bevorzugt wird die Wärmeenergie aus der Abkühlung des wärmeenergieübernehmenden Mediums einem Wärmepumpenprozess zugeführt. Dadurch kann die Wärme besonders effektiv wieder genutzt werden. Weiterhin wird der abgekühlte Wärmeenergieträger bevorzugt zur Kühlung einer externen Wärmeenergiequelle genutzt.

In einer bevorzugten Ausgestaltung der Erfindung hat der Wärmeenergieträger, der typischerweise Brauchwasser oder Abwasser ist, eine Temperatur zwischen 15 °C und 40 °C, insbesondere zwischen 16 °C und 30 °C und insbesondere zwischen 17 °C und 25 °C. Typischerweise hat der Wärmeenergieträger eine Temperatur zwischen 20 °C und 24 °C. In diesem Bereich liegt vergleichsweise häufig Abwasser oder Brauchwasser vor, das eine enorme Energiemenge enthält, jedoch aufgrund der geringen Temperaturdifferenzen kaum genutzt werden kann. Insbesondere derartige Brauchwasser, oder allgemeiner Wasser, sind Gegenstand dieser Erfindung. Weiterhin ist dabei auch die Temperatur des wärmeenergieübernehmenden Mediums, insbesondere von Wasser, zu berücksichtigen. Dieses hat typischerweise eine Temperatur zwischen 8 °C und 15 °C, insbesondere zwischen 10 °C und 14°C, insbesondere eine Temperatur zwischen 11 °C und 13 °C. Bevorzugt beträgt die Temperaturdifferenz zwischen dem Wärmeenergieträger und dem wärmeenergieübernehmenden Medium 5 °C bis 20 °C, insbesondere 6 °C bis 16 °C und besonders bevorzugt 8 °C bis 14 °C. Oftmals beträgt die Temperaturdifferenz zwischen 9 °C und 12 °C. In diesem Bereich arbeiten viele Verfahren nicht wirtschaftlich, jedoch ist mit dem vorliegenden Verfahren auch mit derartigen Temperaturdifferenzen ein besonders gutes und effektives Verfahren zur Wärmeenergiegewinnung bzw. Rückgewinnung möglich.

Ein weiterer Aspekt der Erfindung besteht in der Bereitstellung einer Vorrichtung zur Rückgewinnung von Energie von einem zu kühlenden Wärmeenergieträger auf ein wärmeenergieübernehmendes Medium, insbesondere Wasser, mit einem Wärmeüberträger. Diese Vorrichtung arbeitet insbesondere mit dem oben beschrieben Verfahren. Erfindungsgemäß zeichnet sich die Vorrichtung dadurch aus, dass die Vorrichtung eine Wärmepumpe aufweist, die das wärmeenergieübernehmende Medium abkühlt, bevor es dem Wärmeüberträger zugeführt wird. Mit dieser Vorrichtung werden Wärmepumpe und Wärmeüberträger auf eine neuartige Weise miteinander verbunden und auf diese Weise wird eine besonders hohe Effektivität erreicht.

Erfindungsgemäß ist der Ausgang des Wärmeüberträgers für das wärmeenergieübernehmende Medium mit einem Kondensator der Wärmepumpe verbunden. An dieser Stelle kann die in der Wärmepumpe vorher aufgenommene Energie auf das wärmeenergieübernehmende Medium übertragen und dessen Temperatur weiter erhöht werden.

Der Ausgang des Wärmeüberträgers für das wärmeenergieübernehmende Medium ist bevorzugt noch mit einem anderen Element verbunden oder mit einem Bypass an dem Verdampfer der Wärmepumpe vorbeigeführt, so dass dem Verdampfer der Wärmepumpe nur ein Teilstrom zugeführt wird. Dieser ist einstellbar bzw. je nach Bedarf handhabbar. Bevorzugt ist dieser Ausgang des Wärmeüberträgers für das wärmeenergieübernehmende Medium mit einem Kondensator einer zweiten Wärmepumpe verbunden. Dadurch kann eine weitere Erwärmung des wärmeenergieübernehmenden Mediums erfolgen. Bevorzugt ist der Ausgang des Wärmeüberträgers für den Wärmeenergieträger mit einem zweiten Verdampfer der zweiten Wärmepumpe verbunden. Dadurch bezieht der Kondensator der zweiten Wärmepumpe dann seine Energie. Diese zweite Wärmepumpe ist sozusagen linear hinter den Wärmeüberträger mit der nicht linear angeschlossen ersten Wärmepumpe geschaltet.

Die Wärmeenergiegewinnung bzw. Wärmeenergierückgewinnung mittels einer Wärmepumpe verläuft derart, dass der Wärmeenergieträger durch einen Wärmeüberträger geführt wird und auf der anderen Seite der wärmeenergieübertragenden Wand die Wärmeenergie durch Verdampfen einer Flüssigkeit übernommen wird. Der Wärmeenergieträger kühlt sich dabei um etwa 5 K $\pm$ 1 K ab. Der bei der Wärmeenergieübertragung entstandene Dampf wird auf das benötigte Maß komprimiert und erwärmt sich dabei auf die entsprechende Temperatur. Der komprimierte Dampf wird einem weiteren Wärmeenergieüberträger zugeführt und durch ein wärmeenergieübernehmendes Medium abgekühlt. Der Dampf kondensiert dabei und steht für den nächsten Zyklus wieder zur Verfügung. Bei der erfindungsmäßigen Wärmeenergiegewinnung bzw. Wärmeenergierückgewinnung wird zur Herstellung einer ausreichenden Temperaturdifferenz zwischen dem Wärmeenergieträger, insbesondere Abwasser z. B. warmes Wasser und dem wärmeenergieübernehmenden Medium 1, Frischwasser z. B. kaltes Wasser, das wärmeenergieübernehmende Medium 1 im Zulauf des Wärmeenergierückgewinnungssystems durch Einsatz einer Wärmepumpe 3 abgekühlt. Die vom Verdampfer 4 dieser Wärmepumpe 3 durch Verdampfen eines Kältemittels 8 aufgenommene Wärmeenergiemenge wird durch Kompression des Dampfes in einem Verdichter 5 der Wärmepumpe 3 auf ein höheres Temperaturniveau gebracht und im Kondensator dem wärmeenergieübernehmenden Medium 1, insbesondere Frischwasser, wieder zugeführt.

Das im ersten Verfahrensschritt abgekühlte wärmeenergieübernehmende Medium 1, insbesondere Frischwasser, wird dann in einem Wärmeüberträger 6 durch den abzukühlenden Wärmeenergieträger 2, insbesondere Abwasser, wieder erwärmt. Der Wärmeenergieträger 2, insbesondere Abwasser, wird dabei stärker abgekühlt als bei einer Verfahrensweise ohne vorherige Unterkühlung des wärmeenergieübernehmenden Mediums 1, Frischwasser. Somit steigt die Energieausbeute in dem zur Verfügung stehenden Temperaturband und die Leistung des Wärmeüberträgers 6. Das so erwärmte wärmeenergieübernehmende Medium 1, bzw. aus technischen und wirtschaftlichen Gründen bevorzugt ein Teilstrom 1' davon, wird dem Kondensator 5 der Wärmepumpe 3 zur Übernahme der vorher im Verdampfer 4 abgegebenen Energie zugeführt und dabei weiter erwärmt.

In einem weiteren Schritt wird der Wärmeenergieträger 2 einem weiteren Verdampfer 9 einer zweiten Wärmepumpe 10 zugeführt und dort noch weiter abgekühlt. Der Kältemitteldampf 11 im Wärmepumpenprozess wird komprimiert und die Energie über den Kondensator 13 der zweiten Wärmepumpe 10 auf das wärmeenergieübernehmende Medium 1 übertragen. Ausführungsbeispiel
5 $m^3$ $h^{-1}$ wärmeenergieübernehmendes Medium 1 mit einer Temperatur von 12 °C sollen optimal erwärmt werden. Als Wärmeenergiequelle stehen 5 $m^3$ $h^{-1}$ warmes Wasser mit einer Temperatur von 22 °C zur Verfügung.

Das zu erwärmende wärmeenergieübernehmende Medium 1, insbesondere Frischwasser, wird in einem ersten Schritt dem Verdampfer 4 einer Wärmepumpe 3 zugeführt und dort um 5 K abgekühlt. Der Energieumsatz beträgt 29 kWh. Das wärmeenergieübernehmende Medium 1 wird in einem Wärmeüberträger 6 mit dem Wärmeenergieträger 2, insbesondere Abwasser, in wärmeenergietauschenden Kontakt gebracht und von 7°C auf 18 °C erwärmt. Es werden dabei 63,8 kWh übertragen. Zur weiteren Erwärmung stehen noch die im Dampf des Kältemittels 8 des Verdampferkreislaufs enthalten 29 kWh zur Verfügung. Damit das wärmeenergieübernehmende Medium 1 weiter aufgewärmt werden kann, muss der Dampf des Kältemittels 8 der Wärmepumpe 3 erwärmt werden. Dies erfolgt durch Kompression der Dampfphase des Kältemittels 8 mittels eines Verdichters 7, so dass dieses 35 °C warm wird. Ein Teilstrom 1' des vorgewärmten wärmeenergieübernehmenden Mediums 1, der in der Lage ist, die Energie des Kältemitteldampfs 8 zu übernehmen, wird durch den Kondensator 5 der Wärmepumpe 3 geführt. Bei einer Aufnahme von 29 kWh und einer Aufwärmung bis beispielhaft 30 °C sind dies 2,08 m$^3$ h$^{-1}$. Die Leistung des Verdichters bei Verwendung von R134a wäre

$$w = 1,2/1,2\text{-}1 \times 0,08149 \text{ kJ/kg K} \times 280 \text{ K} \times ((8,87/3,7564)^{0,166} -1) = 11 \times 0,08149 \times 280 \times (1,062\text{-}1) = 20,946 \text{ kJ/kg}$$

$$20,946 \text{ kJ/kg} \times 540 \text{ kg h}^{-1} / 3600 = 3,14 \text{ kWh}$$

Die 3,14 kWh erwärmen die 2,08 m$^3$ noch zusätzlich um 1,3 °C, so dass das gesamte Frischwasser um 0,54 °C auf insgesamt 23,54 °C erwärmt wird.

Der Wärmeenergieträger 2, insbesondere Abwasser, das schon bis auf 11 °C abgekühlt wurde, kann noch weiter gekühlt werden. Lässt man diesen Wärmeenergieträger 2 durch den Verdampfer 9 einer weiteren Wärmepumpe 10 strömen, so kühlt er sich um weitere 5 K ab und erreicht die Endtemperatur 6 °C. Um die im Verdampfer 9 der Wärmepumpe 10 erhaltene Wärmeenergie nutzbar auf den Frischwasserstrom übertragen zu können, ist der Dampf des Kältemittels 11 zu komprimieren, so dass eine Kondensation im Kondensator 13 stattfinden kann.

$$w = 1,2/1,2\text{-}1 \times 0,08149 \text{ kJ/kg K} \times 280 \text{ K} \times ((8,87/3,6265)^{0,166} -1) = 11 \times 0,08149 \times 280 \times (1,16\text{-}1) = 21,9 \text{ kJ/kg}$$

$$21,9 \text{ kJ/kg} \times 538 \text{ kg h}^{-1} / 3600 = 3,27 \text{ kWh}$$

Die 5 m$^3$ wärmeenergieübernehmendes Medium 1, insbesondere Frischwasser, werden um weitere 5,56 °C erwärmt, so dass sich das wärmeenergieübernehmende Medium 1 insgesamt auf etwa 29,1 °C erwärmt. Mit dem vorgestellten Verfahren ist es möglich, die im Wärmeenergieträger 2 vorhandene Energie mit nur geringem Aufwand elektrischer Energie vollends zu erschließen. Durch den Einsatz zweier Wärmepumpen 3 und 10 und deren geleisteter Arbeit im Bereich von 7 kWh (bei einem Wirkungsgrad von 50 % sind es 14 kWh) werden 92,8 kWh Wärmeenergie zurück gewonnen.

Der Wirkungsgrad dieses Prozesses lässt sich als Quotient der zurückgewonnenen Wärmeenergie zum technisch nutzbaren Wärmeenergieangebot und dem zu erhebenden Aufwand beschreiben.

$$Q_r / (Q_{ges} + w_{el}) = \eta$$

$Q_r$ = zurück gewonnene Recycling Wärmeenergie

$Q_{ges}$ = gesamte technisch nutzbare Wärmeenergie der Wärmeenergiequelle

$w_{el}$ = im Prozess geleistete elektrische Arbeit

$\eta$ = Wirkungsgrad

In einem weiteren Schritt (vgl. Abb: 2), kann der abgekühlte Wärmeenergieträger 2, insbesondere Abwasser weiter zur Kühlung eines Kühlkreislaufs 14, wobei Wärmeenergieenergie aus einer externen Wärmeenergiequelle Qmittels eines weiteren Wärmeenergieüberträgers 15 zugeführt wird, verwendet werden. Somit ist die effiziente Wärmenergierückgewinnung an einer Stelle mit einer Kühlung an anderer Stelle gekoppelt, ohne dass weitere Energie benötigt wird.

**Legende**

1    wärmeenergieübernehmendes Medium, insbesondere Frischwasser
2    Wärmeenergieträger, insbesondere Abwasser
3    Wärmepumpe
4    Verdampfer der Wärmepumpe (3)
5    Kondensator der Wärmepumpe (3)
6    Wärmeüberträger
7    Verdichter der Wärmepumpe (3)
8    verdampftes Kältemittel, Kältemitteldampf der Wärmepumpe (3)
9    Verdampfer der Wärmepumpe (10)Wärmeenergieüberträger
10   Wärmepumpe
11   verdampftes Kältemittel, Kältemitteldampf der Wärmepumpe (10)
12   Verdichter der Wärmepumpe (10)
13   Kondensator der Wärmepumpe (10)
14   Kühlkreislauf
15   Wärmeenergieüberträger
16   Kühlkreislaufpumpe
Q    Wärmeenergiequelle

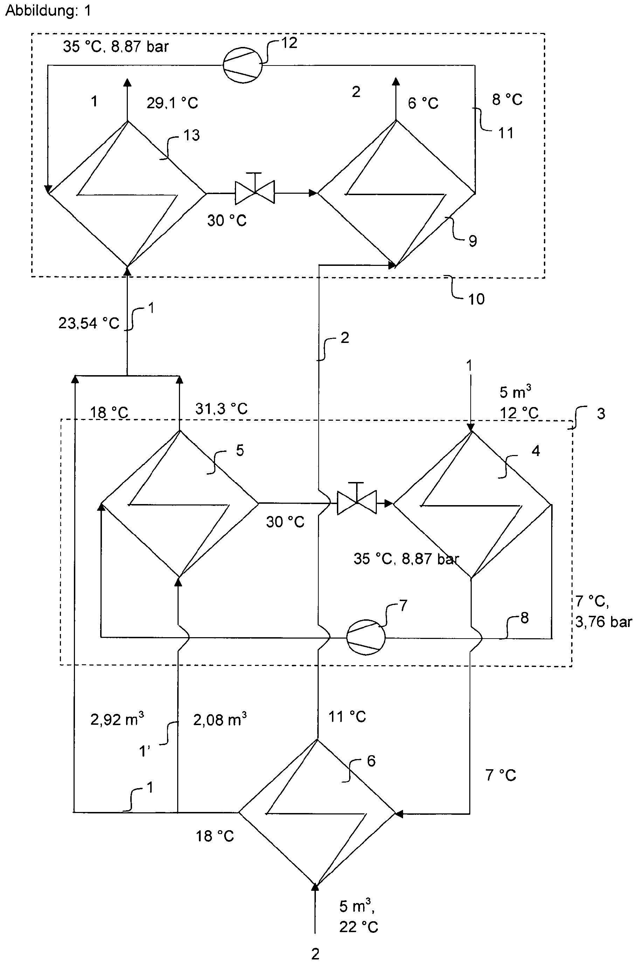

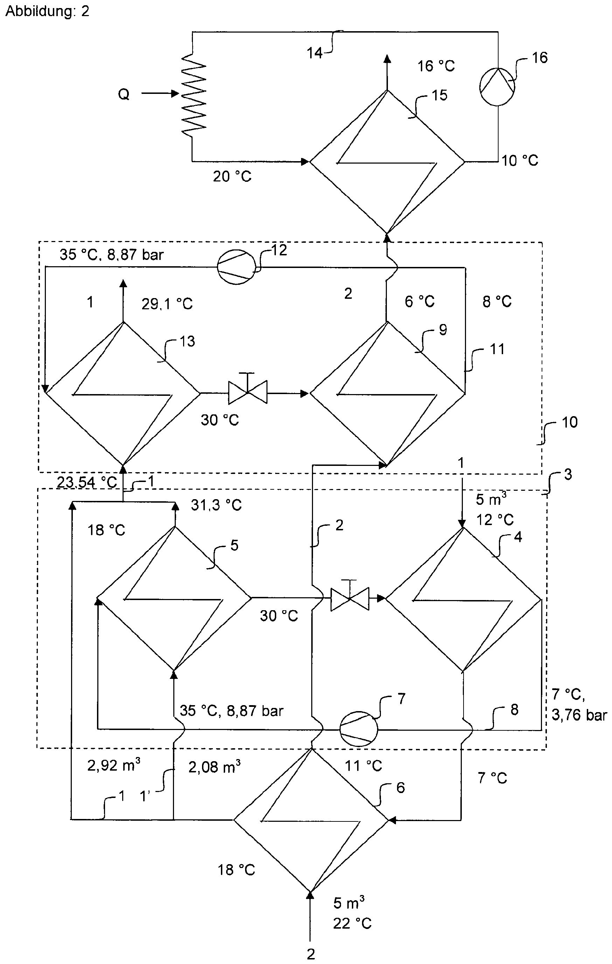

**Patentansprüche**

1.  Verfahren zur Rückgewinnung von Energie von einem Wärmeenergieträger (2) auf ein wärmeenergieübernehmendes Medium (1), wobei das wärmeenergieübernehmende Medium (1) in einer Wärmepumpe (3) abgekühlt wird, indem die Wärmeenergie durch Verdampfen eines Kältemittels (8) in die Wärmepumpe (3) übertragen wird und das wärmeenergieübernehmende Medium (1) dann in einem Wärmeüberträger (6) durch den abzukühlenden Wärmeenergieträger (2) aufgewärmt wird,
    **dadurch gekennzeichnet,**
    **dass** nur ein Teilstrom des wärmeenergieübernehmenden Mediums (1), nachdem es im Wärmeüberträger (6) erwärmt wurde, einem Kondensator (5) zugeführt wird, der die im Dampf des Kältemittels (8) der Wärmepumpe (3) enthaltene Wärmeenergie übernimmt, so dass sich das wärmeenergieübernehmende Medium (1) erwärmt, während der übrige Teilstrom des wärmeenergieübernehmenden Mediums (1) einem Bypass an dem Kondensator (5) vorbeigeführt wird.

2.  Verfahren nach einem der Anspruche 1, **dadurch gekennzeichnet, dass** der abzukühlende Wärmeenergieträger (2) in einem nächsten Verfahrensschritt einem zweiten Verdampfer (9) einer zweiten Wärmepumpe (10) zugeführt wird, die Wärmeenergie des abzukühlenden Wärmeenergieträgers (2) durch Verdampfen eines zweiten Kühlmittels (11) in dem zweiten Verdampfer (9) übertragen wird, durch Kompression des Kühlmitteldampfs auf ein höheres Temperaturniveau gebracht wird und dann in einem zweiten Kondensator (13) der zweiten Wärmepumpe (10) auf das wärmeenergieübernehmende Medium (1) übertragen wird.

3.  Verfahren nach einem der vorhergehenden Ansprüche, **dadurch gekennzeichnet, dass** die Wärmeenergie aus der Abkühlung des wärmeenergieübernehmenden Mediums (1) einem Wärmepumpenprozess zugeführt wird

4.  Verfahren nach einem der vorhergehenden Ansprüche, **dadurch gekennzeichnet, dass** der abgekühlte Wärmeenergieträger (2) zur Kühlung einer externen Wärmeenergiequelle (Q) genutzt wird.

5.  Verfahren nach einem der vorhergehenden Ansprüche, **dadurch gekennzeichnet, dass** der Wärmeenergieträger (2) eine Temperatur zwischen 15 °C und 40 °C, insbesondere zwischen 16 °C und 30 °C, insbesondere zwischen 17 °C und 25 °C und insbesondere zwischen 20 °C und 24 °C aufweist.

6.  Verfahren nach einem der vorhergehenden Ansprüche, **dadurch gekennzeichnet, dass** die Temperaturdifferenz zwischen dem Wärmeenergieträger (2) und dem wärmeenergieübernehmenden Medium (1) 5 °C bis 20 °C, insbesondere 6 °C bis 16 °C und insbesondere 8 °C bis 14 °C und insbesondere 9 °C bis 12 °C beträgt.

**7.** Vorrichtung zur Rückgewinnung von Energie von einem zu kühlenden Wärmeenergieträger (2) auf ein wärmeenergieübernehmendes Medium (1), insbesondere Frischwasser, mit einem Wärmeüberträger (6), wobei die Vorrichtung eine Wärmepumpe (3) aufweist, die das wärmeenergieübernehmende Medium (1) abkühlt, bevor es dem Wärmeüberträger (6) zugeführt wird und der Ausgang des Wärmeüberträgers (6) für das wärmeenergieübernehmende Medium (1) mit einem Kondensator (5) der Wärmepumpe (3) verbunden ist,
**dadurch gekennzeichnet,**
**dass** der Ausgang des Wärmeüberträgers (6) für das energieübernehmende Medium (1) einen Bypass zu dem Kondensator (5) aufweist, so dass nur ein Teilstrom des wärmeenergieübernehmenden Mediums (1) durch den Kondensator (5) der Wärmepumpe (3) fließt.

**8.** Vorrichtung nach Anspruch 7, **dadurch gekennzeichnet, dass** der Ausgang des Wärmeüberträgers (6) für das wärmeenergieübernehmende Medium (1) mit einem Kondensator (13) einer zweiten Wärmepumpe (10) verbunden ist.

**9.** Vorrichtung nach einem der Ansprüche 7 bis 8, **dadurch gekennzeichnet, dass** der Ausgang des Wärmeüberträgers (6) für den Wärmeenergieträger (2) mit einem zweiten Verdampfer (9) einer zweiten Wärmepumpe (10) verbunden ist.

**Claims**

**1.** A method for recovering energy from a heat energy carrier (2) to a heat energy absorbing medium (1), the heat energy absorbing medium (1) being cooled in a heat pump (3) by transferring the heat energy into the heat pump (3) by evaporation of a refrigerant (8) and then heating the heat energy absorbing medium (1) in a heat exchanger (6) by means of the heat energy carrier (2) to be cooled,
**characterised in that**
only a partial stream of the heat energy absorbing medium (1), after it has been heated in the heat exchanger (6), is fed to a condenser (5) which absorbs the heat energy in the steam of the refrigerant (8) of the heat pump (3) so that the heat energy absorbing medium (1) is heated, while the other partial stream of the heat energy absorbing medium (1) is conducted past the condenser (5) with a bypass.

**2.** The method according to Claim 1,
**characterised in that**
in the next method step, the heat energy carrier (2) to be cooled is fed to a second evaporator (9) of a second heat pump (10), the heat energy of the heat energy carrier (2) to be cooled is transferred to the second evaporator (9) by evaporation of a second coolant (11), is brought to a higher temperature level by compression of the coolant steam, and is then transferred to the heat energy absorbing medium (1) in a second condenser (13) of the second heat pump (10).

**3.** The method according to any one of the preceding claims,
**characterised in that**
the heat energy from the cooling of the heat energy absorbing medium (1) is fed to a heat pump process.

**4.** The method according to any one of the preceding claims,
**characterised in that**
the cooled heat energy carrier (2) is used to cool an external heat energy source (Q).

**5.** The method according to any one of the preceding claims,
**characterised in that**
the heat energy carrier (2) has a temperature between 15°C and 40°C, in particular between 16°C and 30°C, in particular between 17°C and 25°C and in particular between 20°C and 24°C.

**6.** The method according to any one of the preceding claims,
**characterised in that**
the temperature difference between the heat energy carrier (2) and the heat energy absorbing medium (1) is 5°C to 20°C, in particular 6°C to 16°C and in particular 8°C to 14°C and in particular 9°C to 12°C.

**7.** A device for recovering energy from a heat energy carrier (2) to be cooled to a heat energy absorbing medium (1), in particular fresh water, with a heat exchanger (6), the device having a heat pump (3) which cools the heat energy absorbing medium (1) before it is fed to the heat exchanger (6) and the output of the heat exchanger (6) for the heat energy absorbing medium (1) is connected to a condenser (5) of the heat pump (3),
**characterised in that**
the output of the heat exchanger (6) for the energy absorbing medium (1) has a bypass relative to the condenser (5) so that only a partial stream of the heat energy absorbing medium (1) flows through the condenser (5) of the heat pump (3).

**8.** The device according to Claim 7,
**characterised in that**
the output of the heat exchanger (6) for the heat energy absorbing medium (1) is connected to a condenser (13) of a second heat pump (10).

**9.** The device according to any one of Claims 7 to 8, **characterised in that**
the output of the heat exchanger (6) for the heat energy carrier (2) is connected to a second evaporator (9) of a second heat pump (10).

**Revendications**

**1.** Procédé de récupération d'énergie à partir d'un fluide caloporteur (2) sur un milieu absorbant l'énergie calorifique (1), le milieu absorbant l'énergie calorifique (1) étant refroidi dans une pompe à chaleur (3), l'énergie calorifique étant transmise par évaporation d'un agent frigorigène (8) dans la pompe à chaleur (3) et le milieu absorbant l'énergie calorifique (1) étant ensuite réchauffé dans un échangeur de chaleur (6) par le fluide caloporteur (2),
**caractérisé en ce que**
seul un flux partiel du milieu recevant l'énergie calorifique (1) après qu'il ait été réchauffé dans l'échangeur de chaleur (6), est acheminé à un condenseur (5) qui absorbe l'énergie calorifique contenue dans la vapeur de l'agent frigorigène (8) de la pompe à chaleur (3) de telle sorte que le milieu absorbant l'énergie calorifique (1) se réchauffe, tandis que le flux partiel restant du milieu absorbant l'énergie calorifique (1) est passé par une dérivation sur le condenseur (5).

**2.** Procédé selon la revendication 1, **caractérisé en ce que** le fluide caloporteur à refroidir (2) est acheminé dans une phase de procédé suivante vers un deuxième évaporateur (9) d'une deuxième pompe à chaleur (10), l'énergie calorifique du fluide caloporteur à refroidir (2) étant transmise par évaporation d'un deuxième agent frigorigène (11) dans le deuxième évaporateur (9), est placée à un niveau de température plus élevé par compression de la vapeur de frigorigène et est transmise ensuite dans un deuxième condenseur (13) de la deuxième pompe à chaleur (10) au milieu absorbant l'énergie calorifique (1).

**3.** Procédé selon l'une quelconque des revendications précédentes, **caractérisé en ce que** l'énergie calorifique est dirigée vers un processus de pompe à chaleur à partir du refroidissement du milieu absorbant l'énergie calorifique (1).

**4.** Procédé selon l'une quelconque des revendications précédentes, **caractérisé en ce que** le fluide caloporteur refroidi (2) est utilisé pour refroidir une source d'énergie calorifique externe (Q).

**5.** Procédé selon l'une quelconque des revendications précédentes, **caractérisé en ce que** le fluide caloporteur (2) comporte une température entre 15°C et 40°C, notamment entre 16°C et 30°C, notamment entre 17°C et 25°C et notamment entre 20°C et 24°C.

**6.** Procédé selon l'une quelconque des revendications précédentes, **caractérisé en ce que** la différence de température entre le fluide caloporteur (2) et le milieu absorbant l'énergie calorifique (1) est de 5°C à 20°C, notamment 6°C à 16°C et notamment 8°C à 14°C et notamment 9°C à 12°C.

**7.** Dispositif de récupération d'énergie à partir d'un fluide caloporteur à refroidir (2) sur un milieu absorbant l'énergie calorifique (1), notamment de l'eau douce, avec un agent caloporteur (6), le dispositif comportant une pompe à chaleur (3), qui refroidit le milieu absorbant l'énergie calorifique (1) avant qu'il ne soit acheminé à l'échangeur de chaleur (6) et la sortie de l'échangeur de chaleur (6) pour le milieu absorbant l'énergie calorifique (1) étant reliée à un condenseur (5) de la pompe à chaleur (3),
**caractérisé en ce que**

la sortie de l'échangeur de chaleur (6) pour le milieu absorbant l'énergie calorifique (1) comporte une dérivation vers le condenseur (5) de telle sorte que seul un flux partiel du milieu absorbant l'énergie calorifique (1) s'écoule à travers le condenseur (5) de la pompe à chaleur (3).

8.  Dispositif selon la revendication 7, **caractérisé en ce que** la sortie du de l'échangeur de chaleur (6) est relié pour le milieu absorbant l'énergie calorifique (1) à un condenseur (13) d'une deuxième pompe à chaleur (10).

9.  Dispositif selon l'une quelconque des revendications 7 à 8, **caractérisé en ce que** la sortie de l'échangeur de chaleur (6) pour le fluide caloporteur (2) est relié à un deuxième évaporateur (9) d'une deuxième pompe à chaleur (10).

Abbildung: 1

35 °C, 8,87 bar

12

1   29,1 °C        2   6 °C      8 °C

13                                11

30 °C                            9

                                 10

23,54 °C   1

2

1

5 m³
12 °C     3

18 °C     31,3 °C

5                      4

30 °C

35 °C, 8,87 bar

7                    7 °C,
7          8        3,76 bar

2,92 m³   2,08 m³   11 °C

1'

6

1                    7 °C

18 °C

5 m³,
22 °C

2

Abbildung: 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100326638 A1
- WO 2011023352 A2

- DE 2757721 A1
- DE 3406518 A1